# EUROPÄISCHE PATENTSCHRIFT

(11) **EP 2 093 007 B1**
(45) Veröffentlichungstag und Bekanntmachung des Hinweises auf die Patenterteilung: **17.11.2010**
(21) Anmeldenummer: 09000676.8
(22) Anmeldetag: 19.01.2009
(51) Int. Cl.: B23F 1/02, B23F 23/12

(54) **Verzahnungsschleifmaschine sowieVerfahren und Steuerungssoftware zum Betrieb derselben**
Dovetail grinding machine, method and software control for operating same
Machine de ponçage de dentures, procédé et logiciel de contrôle destinés au fonctionnement de celle-ci

(30) Priorität: 21.02.2008 DE 102008010301
(43) Veröffentlichungstag der Anmeldung: 26.08.2009
(73) Patentinhaber: LIEBHERR-VERZAHNTECHNIK GmbH, 87437 Kempten (DE)
(72) Erfinder: Breith, Thomas, Dipl.-Ing., 87439 Kempten (DE); Zankl, Manfred, 87634 Obergünzburg (DE)
(74) Vertreter: Laufhütte, Dieter

(56) Entgegenhaltungen:
- US-A- 1 759 333

## Beschreibung

Die vorliegende Erfindung betrifft ein Verfahren zum Betrieb einer Verzahnungsschleifmaschine. Solche Verzahnungsschleifmaschinen dienen dabei dem Bearbeiten eines Werkstückes auf der Verzahnungsschleifmaschine mittels einer Schleifscheibe und/oder Schleifschnecke.

Verzahnungsschleifmaschinen werden bei der Herstellung von Zahnrädern zur Hartfeinbearbeitung von vorbearbeiteten Zahnrädern eingesetzt, um diesen ihre endgültige Geometrie zu verleihen. Üblicherweise werden bei der Herstellung von Zahnrädern dabei zunächst in einem Weichvorbearbeitungsschritt Zähne aus einem rotationssymmetrischen Werkstück geformt, z. B. durch Fräsen oder Stoßen. Das so vorbearbeitete Werkstück wird daraufhin einer Wärmebehandlung unterzogen, durch welche zumindest die in der Nähe der Oberfläche der Zähne gelegenen Bereiche des Zahnrads gehärtet werden. Um die bei der Wärmebehandlung auftretenden Veränderungen der Oberflächengeometrie auszugleichen und die Oberflächengeometrie der Zähne mit größerer Präzision zu fertigen, erfolgt die Hartfeinbearbeitung auf der Verzahnungsschleifmaschine. Dabei wird eine Schleifscheibe oder eine Schleifschnecke eingesetzt, mit welcher das Werkstück bearbeitet wird und welche diesem seine endgültige Geometrie verleiht.

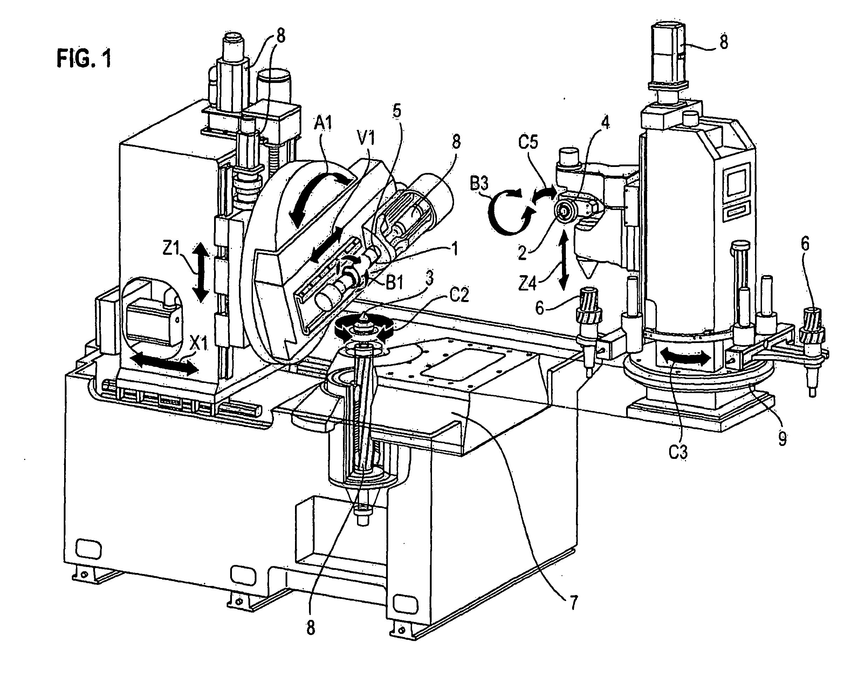

Eine solche Verzahnungsschleifmaschine ist dabei in Figur 1 gezeigt. Diese weist eine Werkstückaufnahme 3 auf, in welche ein Werkstück 6 eingespannt werden kann. Die Werkstückaufnahme 3 ist dabei um die Achse C2 drehbar, welche vorteilhafterweise senkrecht ausgerichtet ist. Alternativ können aber auch horizontal ausgerichtete Werkstückaufnahmen zum Einsatz kommen. Die Verzahnungsschleifmaschine weist weiterhin eine Arbeitsspindel 5 zum Einspannen eines Werkzeuges auf. In diese Arbeitsspindel 5 können eine oder mehrere Schleifscheiben und/oder eine oder mehrere Schleifschnecken 1 eingespannt werden. Die Arbeitsspindel 5 kann dabei durch den Motor 8 in Rotation versetzt werden, wobei die Drehachse B1 der Arbeitsspindel 5 in einer Ebene verschwenkbar ist, welche parallel zur Drehachse der Werkstückaufnahme 3 verläuft. Hierzu kann die Arbeitsspindel 5 um eine Schwenkachse A1 verschwenkt werden, welche senkrecht auf der Ebene steht, in welcher die Drehachse B1 der Arbeitsspindel 5 verläuft und welche zudem senkrecht zu der Drehachse der Werkzeugaufnahme 3 verläuft. Die Arbeitsspindel 5 kann weiterhin linear in Richtung ihrer Drehachse B1, d. h. entlang des Pfeils V1, vershiftet werden. Weiterhin kann die Arbeitsspindel 5 linear in einer Richtung parallel zur Drehachse C2 der Arbeitsspindel 3 bewegt werden, d. h. entlang des Pfeils Z1. Zudem kann die Arbeitsspindel in einer Richtung senkrecht zur Drehachse C2 der Werkstückaufnahme 3 linear bewegt werden, d. h. entlang des Pfeils X1, um die in der Arbeitsspindel 5 eingespannte Schleifscheibe oder Schleifschnecke 1 an das der Werkstückaufnahme 3 eingespannte Werkstück heranzufahren oder von diesem wegzufahren oder gezielte Korrekturen zu erzielen. Die Bearbeitung des Werkstücks mit der Schleifscheibe oder Schleifschnecke erfolgt dabei üblicherweise durch Wälzschleifen oder Profilschleifen oder einer Kombination daraus.

Die Entwicklung im Getriebebau zur Übertragung höherer Leistungsdichten bei gleichzeitig geringerer Geräuschemission führen bei Zahnrädern zu immer komplexeren Verzahnungsgeometrien bzw. Verzahnungstopologien. Dank dieser Modifikation der Verzahnungsgeometrien können die Tragbilder von Verzahnung unter verschiedenen Lastzuständen optimiert werden und die Schub- und Zugbelastung zwischen den im Eingriff befindlichen Verzahnungen verbessert werden. Der Trend geht dabei zu immer komplexeren Zahnradgeometrien, die in immer kürzerer Reaktionszeit in kleineren Losgrößen hergestellt werden müssen.

Um die Schleifscheiben oder Schleifschnecken an die gewünschte Geometrie des Zahnrades anzupassen und/oder den Verschleiß einer Schleifscheibe und/oder Schleifschnecke auszugleichen, müssen die Schleifscheibe oder Schleifschnecke zur Einstellung auf eine neue Geometrie des Werkstücks und in regelmäßigen Abständen während des Betriebs abgerichtet werden. Das Abrichten bzw. Profilieren einer Schleifscheibe und/oder Schleifschnecke umfasst dabei das eigentliche Profilieren, d.h. das Generieren der erforderlichen Geometrie der Schleifscheibe und/oder Schleifschnecke (Rundlauf, Zylindrizität, Profil), und das Schärfen, d.h. das Erzeugen einer schnittfreudigen Schleifoberfläche (Mikrogeometrie), und wird aus Gründen der Klarheit im Folgenden durchgehend als Profilieren bezeichnet. Das zum Profilieren einer Schleifscheibe oder Schleifschnecke verwendete Werkzeug wird dementsprechend im Folgenden als Profilierwerkzeug bezeichnet.

Für das Profilieren von Schleifscheiben und Schleifschnecken, insbesondere von zylindrischen unkorrigierten Schleifschnecken und zylindrischen modifizierten Schleifschnecken finden dabei unterschiedliche Profilierwerkzeuge ihren Einsatz. In den Figuren 2 bis 4 sind dabei solche Profilierwerkzeuge 2, welche zum Profilieren einer Schleifschnecke 1 eingesetzt werden, gezeigt. In Figur 2 handelt es sich um rotationssymmetrische Profilierwerkzeuge, in Figur 3 um ein Profilierwerkzeug in Form eines Zahnrades, welches auch Profilierrad (Meisterrad) genannt wird. Figur 4 zeigt weitere rotationssymmetrische Profilierwerkzeuge mit komplexeren Geometrien.

Das Profilieren der Schleifscheiben oder Schleifschnecken kann auf der Verzahnungsschleifmaschine, d.h. auf der Produktionsmaschine, auf welcher auch die Zahnräder bearbeitet werden, erfolgen. Hierzu werden die Profilierwerkzeuge auf der Verzahnungsschleifmaschine, wie in Fig. 1 dargestellt, auf einer Profilierspindel montiert, von dieser angetrieben und können um ihre Aufspannachse bei Bedarf gezielt geschwenkt werden. Die Profilierspindel 4 in Figur 1 ist dabei um die Drehachse B3, welche senkrecht zur Drehachse C2 der Werkstückaufnahme verläuft, antreibbar. Zudem ist die Profilierspindel 4 um die Schwenkachse C5, welche parallel zur Drehachse C2 der Werkstückaufnahme 3 verläuft schwenkbar. Weiterhin ist die Profilierspindel 4 in einer Richtung, welche parallel zur Drehachse C2 der Werkstückaufnahme 3 verläuft, linear verschiebbar, d. h. entlang des Pfeils Z4. Die zu profilierende Schleifschnecke oder Schleifscheibe wird dabei beim Profilieren ebenfalls angetrieben und gezielt zum Profilierwerkzeug eingeschwenkt, damit das Profilieren der Schleifschnecke im Normalschnitt erfolgen kann. Das Profilieren der Schleifschnecke findet dabei entweder einflankig oder zweiflankig in mehreren Durchgängen statt, wobei bei Bedarf die Profilflanken voneinander unterschiedlich und über die Schneckenlänge veränderlich profiliert werden können, um eine sogenannte dreidimensional modifizierte Schleifschnecke zu erzeugen.

Die Schleifscheiben oder Schleifschnecken zum Schleifen des Werkstücks bestehen dabei üblicherweise aus gebundenem Hartstoffkorn, z.B. Korund oder einer Korund-Modifikation, oder aber aus keramisch gebundenem oder galvanisch gebundenem Bornitrit. Die Genauigkeit der Profilierung der Schleifscheibe oder Schleifschnecke bestimmt dabei in großem Maße die Genauigkeit der Verzahnung. Die im Stand der Technik verwendeten Profilierwerkzeuge sind üblicherweise einlagig hartstoffbeschichtet und werden vorzugsweise galvanisch positiv oder galvanisch negativ mit Diamant oder kubischem Bornitrit belegt und noch mechanisch nachkonditioniert, um die hohe erforderliche Endqualität hinsichtlich Profilgeometrie und Werkzeugstandzeit zu erfüllen. Die Herstellung bedarf üblicherweise eines metallischen Grundkörpers, der ebenfalls mechanisch in enger Qualität hergestellt werden muss, eines chemischen oder elektrochemischen Beschichtungsprozesses und bei Bedarf einer genauen mechanischen Nachbearbeitung, d.h. einer Profilierung bzw. eines Abrichtens des Profilierwerkzeugs. Das Profilieren bzw. Abrichten eines Profilierwerkzeugs, welches wiederum das eigentliche Profilieren, d.h. das Generieren der erforderlichen Geometrie des Profilierwerkzeugs (Rundlauf, Zylindrizität, Profil) und das Schärfen, d.h. das Erzeugen einer schnittfreudigen Profilieroberfläche (Mikrogeometrie) umfasst, wird dabei im Folgenden durchgehend als Abrichten bezeichnet, um Verwechslungen mit dem Profilieren einer Schleifscheibe und/oder Schleifschnecke zu vermeiden. Das zum Abrichten eines Profilierwerkzeugs eingesetzte Werkzeug wird dabei ebenfalls durchgängig als Abrichtwerkzeug bezeichnet.

Der Herstellprozess bekannter Profilierwerkzeuge ist dabei mehrstufig und zeitaufwendig, das erzeugte Werkzeug weist eine vordefinierte Geometrie auf, die zwischen dem Werkzeuglieferanten und dem Kunden genau abgestimmt werden muss und über eine lange Standzeit erhalten bleiben soll. Die Herstellung wird dabei durch weltweit wenige spezialisierte Werkzeughersteller sichergestellt. Durch den spezifischen Ablauf sind die Werkzeuge relativ teuer und haben nicht unbedeutende Lieferzeiten. Für das Abrichten bzw. die Wiederbelegung und das Abrichten müssen die Werkzeuge dabei zum Hersteller zurückgesendet werden und ein sogenannter Wiederbeschichtungs- oder Nachschärfungsprozess wird in Gang gesetzt. Im Rahmen eines solchen Prozesses können auch Geometrieänderungen an den Profilierwerkzeugen in bestimmten Grenzen zu bestimmten Kosten durchgeführt werden.

Die Nachteile der bisher verfügbaren Werkzeugsysteme sind dabei, dass Änderungen an der Profilgeometrie des Kundenwerkstückes, die nicht durch das Schwenken oder mit gezielter Zustellung beim Schleifschnecken-Abrichten hergestellt werden können, nur mit dem sogenannten Zeilen-Abrichten erzeugt werden können. Dieses Verfahren hat jedoch den Nachteil, dass das zeilenförmige Vor-, Fertig- und Nachprofilieren einer zylindrischen Schleifschnecke durch die Vielzahl der einzelnen Profilierschritte sehr zeitaufwendig ist und sich deshalb für das Schleifen von wiederkehrenden Losgrößen auf der Produktionsmaschine nur bedingt eignet.

Aufgabe der vorliegenden Erfindung ist es daher, ein Verfahren bereitzustellen, welches den Zahnradherstellern ermöglicht, Zahnräder in unterschiedlicher Geometrie und Topologie kurzfristig, flexibel und kostengünstig herzustellen.

Erfindungsgemäß wird diese Aufgabe von einem Verfahren gemäß Anspruch 1 gelöst.

Auf einer Verzahnungsschleifmaschine, auf welcher erfindungsgemäß das Abrichten des Profilierwerkzeuges erfolgt, wird dabei vorteilhafterweise im Schleifbetrieb ein in einer Werkstückaufnahme eingespanntes Werkstück mit einer in einer Arbeitsspindel eingespannten Schleifscheibe und/oder Schleifschnecke bearbeitet. Die Verzahnungsschleifmaschine wird also neben der üblichen Bearbeitung von Werkstücken, d. h. Zahnrädern, auch zum Abrichten des Profilierwerkzeuges eingesetzt.

Auf einer Verzahnungsschleifmaschine, auf welcher erfindungsgemäß das Abrichten des Profiliervverkzeugs erfolgt, wird weiterhin vorteilhafterweise im Profilierbetrieb eine in eine Arbeitsspindel eingespannte Schleifscheibe oder Schleifschnecke mit einem in eine Profilierspindel eingespannten Profilierwerkzeug profiliert. Auf der Verzahnungsschleifmaschine, auf welcher neben der Bearbeitung des Werkstücks auch das Profilieren der Schleifschnecke erfolgt, kann damit erfindungsgemäß auch das Abrichten des Profilierwerkzeugs erfolgen.

Weiterhin vorteilhafterweise kann dabei für den Abrichtbetrieb eine separate Abrichtspindel eingesetzt werden. Hierdurch muss der Anwender das Abrichtwerkzeug zum Abrichten eines Profilierwerkzeuges nicht extra umspannen. Die Abrichtspindel kann dabei vorteilhafterweise im Bereich der Profilierspindel angeordnet sein, insbesondere über der Profilierspindel, und mit dieser bewegt und/oder verschwenkt werden, oder im Bereich der Arbeitsspindel, insbesondere am Arbeitskopf, angeordnet sein und mit dieser bewegt, verschwenkt und/oder vershiftet werden.

Alternativ kann das Abrichten jedoch auch mittels der bereits für den Schleifbetrieb und/oder Profilierbetrieb vorgesehenen Spindeln erfolgen.

Je nach Geometrie des Profilierwerkzeugs ergeben sich dabei unterschiedliche Verfahren, mit welchen das Profilierwerkzeug erfindungsgemäß auf der Verzahnungsschleifmaschine abgerichtet werden kann.

Die vorliegende Erfindung umfasst daher ein Verfahren, bei welchem zum Abrichten eines rotationssymmetrischen Profilierwerkzeuges das in die Arbeitsspindel eingespannte Profilierwerkzeug mit einem in die Profilierspindel der Verzahnungsschleifmaschine eingespannten Abrichtwerkzeug abgerichtet wird oder das in die Profilierspindel der Verzahnungsschleifmaschine eingespannte Profilierwerkzeug mit einem in die Arbeitsspindel der Verzahnungsschleifmaschine eingespannten Abrichtwerkzeug abgerichtet wird. Durch die NC-Achsen der Arbeitsspindel und der Profilierspindel können dabei alle gewünschten Profilkorrekturen und Modifikationen am abzurichtenden Profilierwerkzeug erzeugt werden. Dabei wird das Profilierwerkzeug im optimalen Abrichtverhältnis vor-, fertig- und nachbearbeitet.

Alternativ kann zum Abrichten eines rotationssymmetrischen Profilierwerkzeuges das in die Werkstückaufnahme eingespannte Profilierwerkzeug mit einem in die Arbeitsspindel der Verzahnungsschleifmaschine eingespannten Abrichtwerkzeug abgerichtet werden. Dabei wird die Drehachse der Arbeitsspindel vorteilhafterweise im wesentlichen parallel zur Drehachse der Werkstückaufnahme ausgerichtet, so dass sich eine Situation vergleichbar mit dem Rotorfräsen ergibt.

In weiterhin vorteilhafter Weise werden das Profilierwerkzeug und/oder das Abrichtwerkzeug um die jeweiligen Spindeldrehachsen in Rotation versetzt. In weiterhin vorteilhafter Weise wird die Kontur des Profilierwerkzeugs mit den weiteren Maschinenachsen abgefahren, insbesondere indem die Arbeitsspindel geschwenkt, vershiftet und/oder zugestellt und/oder die Profilierspindel geschwenkt und/oder die Abrichtspindel entsprechend bewegt wird. Durch die freie Wahl der NC-gesteuerten Bahnkontur sind dabei alle möglichen Profilveränderungen und Korrekturen am Profilierwerkzeug erzeugbar, so dass dieses Werkzeug später auf der Verzahnungsschleifmaschine zum Profilieren von profilierbaren Schleifschnecken und profilierbaren Schleifscheiben verwendet werden kann, um diese mit den gewünschten Geometrien auszustatten.

Als Werkzeuge zum Abrichten des Profilierwerkzeugs dienen dabei entweder eine Formrolle, d. h. ein Werkzeug mit definiertem Kopfradius oder bei Bedarf mit abgesetztem definierten Kopfradius. Dieses Werkzeug wird auf der Profilierspindel eingespannt, durch welche die Geschwindigkeit und Drehrichtung bestimmt werden kann, um ein in der Arbeitsspindel eingespanntes Profilierwerkzeug abzurichten, welches dann durch Verschwenken der Arbeitsspindel im Normalschnitt mit dem Abrichtwerkzeug in Kontakt gebracht werden kann. Alternativ kann das abzurichtende Profilierwerkzeug auch auf der Profilierspindel eingespannt werden, durch welche die Geschwindigkeit und Drehrichtung gezielt definiert wird, wobei die Profilierspindel gegebenenfalls um ihre Schwenkachse verschwenkt werden kann. Das Abrichtwerkzeug wird dann auf der Arbeitsspindel eingespannt und durch diese angetrieben, auf dieser vershiftet und die Drehrichtung frei gewählt. Als Abrichtwerkzeug dient dabei wiederum vorzugsweise eine Formrolle mit definiertem Kopfradius oder mit abgesetztem definiertem Kopfradius.

Vorteilhafterweise werden beim Abrichten das Abrichtwerkzeug und das Profilierwerkzeug in einem definierten, optimierten Geschwindigkeitsverhältnis miteinander in Punkt-Kontakt gebracht, wobei bei Bedarf das in der Profilierspindel eingespannte Profilierwerkzeug oder Abrichtwerkzeug gezielt verschwenkt werden kann, um an jedem Kontaktpunkt den optimalen Punkt des Abrichtwerkzeugs in Kontakt zu bringen und eine hohe Endgenauigkeit sicherzustellen.

Durch die NC-Achsen, über welche die Arbeitsspindel bewegt werden kann, kann jede beliebige Bahn gezielt abgefahren werden, so dass der Kopfradius des Profilierwerkzeuges, die Profilform, z. B. Balligkeit, Kopfrücknahme, Fußrücknahme sowie der Radius am Kopfprofilierwerkzeugs erzeugt werden. Das Abrichten erfolgt dabei mit sehr kleinen Beträgen, um das Profilierwerkzeug und das Abrichtwerkzeug zu schonen und eine lange Lebensdauer zu ermöglichen.

Das Abrichten des Profilierwerkzeuges erfolgt vorteilhafterweise durch Wälzschleifen, insbesondere Teilwälzschleifen und/oder Profilschleifen.

Vorteilhafterweise wird dabei das Profilierwerkzeug in die Werkstückaufnahme gespannt, gedreht und positioniert und das in die Arbeitsspindel eingespannte Abrichtwerkzeug in Rotation versetzt.

In weiterhin vorteilhafter Weise wird das in die Arbeitsspindel eingespannte Abrichtwerkzeug verschwenkt und vershiftet, wobei der Arbeitshub durch eine Bewegung der Arbeitsspindel in eine Richtung parallel zur Drehachse der Werkstückaufnahme erfolgt und das Abrichtwerkzeug durch eine Bewegung der Arbeitsspindel in eine Richtung senkrecht zur Drehachse der Werkstückaufnahme an das Profilierwerkzeug herangefahren wird. Zum Vor, - Fertig- und Nachabrichten von Schrägverzahnungen kann dabei vorteilhafterweise eine Kopplung der einzelnen Achsen erfolgen. Das Abrichten erfolgt dabei vorteilhafterweise einflankig oder zweiflankig mittels eines Teilwälz- oder Profilschleifverfahrens.

In weiterhin vorteilhafter Weise werden bei dem erfindungsgemäßen Verfahren mehrlagig hartstoffbelegte Profilierwerkzeuge abgerichtet. Die mehrlagige Hartstoffschicht kann dabei homogen ausgeführt werden, kann aber auch durch Art, Dichte, Bindung und unterschiedliche Hartstoffkörner unterschiedlich ausgeführt werden, um dem späteren Verschleißverhalten des Profilierwerkzeuges Rechnung zu tragen. Vorteilhafterweise kann z. B. eine Verschleißverstärkung am Werkzeugkopf stattfinden.

Die Profilierwerkzeuge sind dabei mehrlagig hartstoffbeschichtet und weisen einen bestimmten Betrag der Hartstoffbeschichtung zum Nachabrichten auf. Als Basis eines rotationssymmetrischen Profilierwerkzeugs wird dabei ein rotationssymmetrischer Ausgangskörper verwendet. Als Basis eines Profilierzahnrades wird dabei entweder ein mehrlagig hartstoffbeschichtetes Zahnrad, welches gerade oder schräg verzahnt ist, eingesetzt, oder ein scheibenförmiger, zylindrischer Ausgangskörper, welcher dann entsprechend abgerichtet wird. Ein solcher scheibenförmiger, zylindrischer Ausgangskörper wird dabei vorteilhafterweise nur dann verwendet, wenn das Zahnradmodul begrenzt und damit das abzurichtende Volumen klein ist.

In weiterhin vorteilhafter Weise wird dabei zum Abrichten des Profilierwerkzeugs ein hartstoffbelegtes Abrichtwerkzeug eingesetzt. Als Abrichtwerkzeuge dienen dabei vorteilhafterweise hartstoffbelegte Profilschleifscheiben für den Ein- oder Zweiflankenschliff. Ebenso können weitere hartstoffbelegte Abrichtwerkzeuge eingesetzt werden. Es kann auch eine Kombination mehrerer Abrichtwerkzeuge zum Einsatz kommen, wobei z. B. ein Teilwälzschleifschritt und ein Profilschleifschritt mit jeweils unterschiedlichen Werkzeugen erfolgt.

In weiterhin vorteilhafter Weise wird das Profilierwerkzeug auf der Verzahnschleifmaschine vermessen. Die hierbei gewonnenen Vermessungsdaten des Profilierwerkzeugs, welches die Geometrie bzw. Topologie des Profilierwerkzeugs angeben, können dann vielfältig zur Steuerung der Verzahnschleifmaschine eingesetzt werden.

Vorteilhafterweise werden dabei die beim Vermessen gewonnenen Vermessungsdaten gespeichert. Vorteilhafterweise wird erfindungsgemäß der Verschleiß des Profilierwerkzeugs anhand der Vermessungsdaten überwacht. So kann sichergestellt werden, dass das Profilierwerkzeug immer die gewünschte Geometrie aufweist und bei auftretenden Verschleiß rechtzeitig neu abgerichtet wird.

In weiterhin vorteilhafter Weise erfolgt erfindungsgemäß der Einsatz des Profilierwerkzeugs beim Profilieren der Schleifscheibe oder Schleifschnecke auf Grundlage der Vermessungsdaten. Hierdurch können ein etwaiger Verschleiß des Profilierwerkzeugs beim Profilieren der Schleifscheiben oder Schleifschnecken berücksichtigt werden, so dass sich die Genauigkeit der Profilierung der Schleifschnecken erhöht.

In weiterhin vorteilhafter Weise erfolgt das Abrichten des Profilierwerkzeugs auf Grundlage der Vermessungsdaten. Diese Rückkopplung der Vermessungsdaten in die Maschinensteuerung für den Einsatz des Abrichters beim Vor-, Fertig- und Nachabrichten des Profilierwerkzeugs erlaubt dabei ein besonders exaktes Abrichten der Profilierwerkzeuge.

Vorteilhafterweise wird das Profilierwerkzeug zum Vermessen in die Profilierspindel gespannt und durch einen Tastkopf abgetastet. In vorteilhafter Weise wird der Tastkopf dabei am Schleifkopf der Verzahnschleifmaschine angeordnet. Durch die erfindungsgemäße Vermessung kann die erzeugte Endqualität dokumentiert und bei Bedarf ein weiterer Abrichtschritt gezielt durchgeführt werden. Dieselbe Prüfmethode kann auch als Verschleißüberwachung verwendet werden und in festgelegten Intervallen eingesetzt werden.

Die vorliegende Erfindung umfasst weiterhin eine Verzahnungsschleifmaschine gemäß Anspruch 18.

Die erfindungsgemäße Verzahnungsschleifmaschine weist dabei vorteilhafterweise eine Werkstückaufnahme zum Einspannen eines Werkstücks und eine Arbeitsspindel zum Einspannen einer Schleifscheibe oder Schleifschnecke auf.

In weiterhin vorteilhafter Weise kann dabei die Werkstückaufnahme um eine Drehachse gedreht werden und die Arbeitsspindel in eine Richtung parallel zur Drehachse der Werkstückaufnahme und in eine Richtung senkrecht zur Drehachse der Werkstückaufnahme bewegt werden.

In weiterhin vorteilhafter Weise kann die Arbeitsspindel der erfindungsgemäßen Verzahnungsschleifmaschine in Richtung ihrer Drehachse vershiftet und um eine Schwenkachse, welche senkrecht zur Drehachse der Werkstückaufnahme verläuft, verschwenkt werden.

Durch die entsprechenden Aufnahmen und Spindeln sowie deren Bewegbarkeit kann dabei auf der Verzahnungsschleifmaschine wie im Stand der Technik ein Werkstück mittels einer Schleifscheibe und/oder Schleifschnecke bearbeitet werden, sowie erfindungsgemäß ein Profilierwerkzeug abgerichtet werden.

Die erfindungsgemäße Verzahnungsschleifmaschine umfasst weiterhin vorteilhafter Weise eine Profilierspindel zum Einspannen eines Profilierwerkzeugs.

Vorteilhafterweise kann dabei die Profilierspindel in eine Richtung parallel zur Drehachse der Werkstückaufnahme bewegt und um eine Schwenkachse, welche parallel zur Drehachse der Werkstückaufnahme verläuft, verschwenkt werden. Hierdurch kann auf der erfindungsgemäßen Verzahnungsschleifmaschine wie im Stand der Technik die Schleifscheibe oder Schleifschnecke profiliert werden, sowie erfindungsgemäß das Profilierwerkzeug abgerichtet werden.

Die erfindungsgemäße Verzahnungsschleifmaschine weist dabei vorteilhafterweise eine Abrichtspindel zum Einspannen eines Abrichtwerkzeuges auf. Durch eine solche separate Abrichtspindel, welche insbesondere neben der Arbeitsspindel, der Profilierspindel und der Werkstückaufnahme vorgesehen ist, entfällt für den Anwender beim Abrichten eines Profilierwerkzeuges der Umspannprozess.

Vorteilhafterweise ist die Abrichtspindel dabei im Bereich der Profilierspindel angeordnet, insbesondere über der Profilierspindel, und kann mit dieser bewegt und/oder verschwenkt werden, oder die Abrichtspindel ist im Bereich der Arbeitsspindel angeordnet, insbesondere am Arbeitskopf, und kann mit dieser bewegt, verschwenkt und/oder vershiftet werden. Hierdurch muss für den Abrichtvorgang lediglich die Abrichtspindel sowie deren Antrieb vorgesehen werden, während die sonstigen Bewegungsabläufe über die ohnehin bereits vorhandenen NC-Achsen der Verzahnungsschleifmaschine vorgenommen werden.

Alternativ kann auf eine separate Abrichtspindel aber auch verzichtet werden und das Abrichten allein durch die ohnehin bereits vorhandenen NC-Achsen der Verzahnungsschleifmaschine erfolgen.

Vorteilhafterweise umfasst die Verzahnungsschleifmaschine dabei einen Arbeitsmodus, in welchem ein Werkstück mittels einer Schleifscheibe und/oder Schleifschnecke bearbeitet wird. Die Steuerung der Verzahnungsschleifmaschine umfasst hierzu vorteilhafterweise eine entsprechende Bedienerführung. In weiterhin vorteilhafter Weise umfasst die erfindungsgemäße Verzahnungsschleifmaschine einen Profiliermodus, in welchem eine Schleifscheibe oder Schleifschnecke mittels eines Profilierwerkzeugs profiliert wird. Wiederum weist die erfindungsgemäße Steuerung hierzu vorteilhafterweise eine entsprechende Bedienerführung auf. In weiterhin vorteilhafter Weise weist die erfindungsgemäße Verzahnungsschleifmaschine weiterhin einen Abrichtmodus zum Abrichten eines dem Profilieren einer Schleifscheibe oder Schleifschnecke gedienten Profilierwerkzeugs auf. Hierdurch kann neben dem Bearbeiten des Werkstücks und gegebenenfalls dem Profilieren einer Schleifscheibe auch das Abrichten des Profilierwerkzeugs auf der erfindungsgemäßen Verzahnungsschleifmaschine erfolgen, wobei ein entsprechender Abrichtmodus und vorteilhafterweise eine entsprechende Bedienerführung in der Steuerung der Verzahnungsschleifmaschine vorgesehen sind.

In weiterhin vorteilhafter Weise weist die erfindungsgemäße Verzahnungsschleifmaschine zudem einen Vermessungsmodus auf, in welchem ein Profilwerkzeug vermessen wird. Hierdurch kann erfindungsgemäß ein Profilierwerkzeug nicht nur abgerichtet, sondern auch auf der Verzahnungsschleifmaschine vermessen werden, wozu die Steuerung der erfindungsgemäßen Verzahnungsschleifmaschine einen entsprechenden Vermessungsmodus und vorteilhafterweise eine entsprechende Bedienerführung aufweist.

In weiterhin vorteilhafter Weise weist die erfindungsgemäße Steuerung einen oder mehrere Betriebsmodi und/oder eine Bedienerführung zur Durchführung eines Verfahrens auf, wie es weiter oben beschrieben wurde. Hierdurch ergeben sich wiederum die Vorteile, welche oben bezüglich der Verfahren angegeben wurden.

Die vorliegende Erfindung umfasst weiterhin eine Steuerungssoftware gemäß Anspruch 31.

Die vorliegende Erfindung umfasst weiterhin die Verwendung einer Verzahnungsschleifmaschine gemäß Anspruch 32.

Die vorliegende Erfindung wird nun anhand von Ausführungsbeispielen sowie Zeichnungen näher dargestellt. Dabei zeigen:
- Figur 1:: ein Ausführungsbeispiel einer Verzahnungsschleifmaschine,

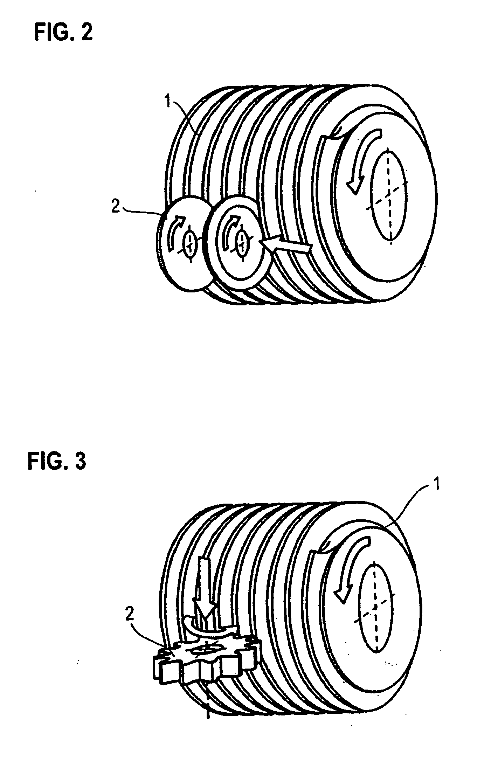

- Figur 2:: das Profilieren einer Schleifschnecke mit rotationssymmetrischen Profi- lierwerkzeugen,
- Figur 3:: das Profilieren einer Schleifschnecke mit einem Profilierzahnrad und

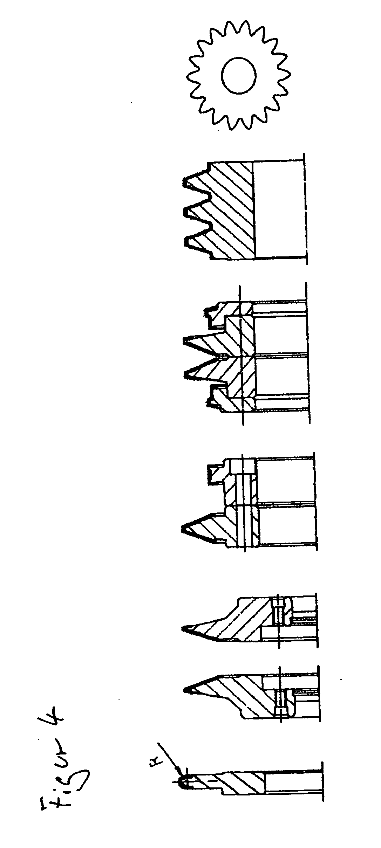

- Figur 4:: alternative rotationssymmetrische Profilierwerkzeuge mit komplexerer Geometrie.

Der generelle Aufbau der Verzahnungsschleifmaschine, wie sie in Figur 1 dargestellt ist, wurde bereits eingangs bezüglich des Standes der Technik dargestellt. Eine solche Verzahnungsschleifmaschine wird nun auch zur Durchführung des erfindungsgemäßen Verfahrens eingesetzt, wobei die Steuerung der Verzahnungsschleifmaschine vorteilhafterweise zur Durchführung dieses Verfahrens ausgelegt ist, insbesondere indem sie entsprechende Arbeitsmodi und eine entsprechende Bedienerführung aufweist.

Im folgenden werden nun zwei Ausführungsbeispiele für das erfindungsgemäße Abrichten eines Profilierwerkzeugs auf einer solchen Verzahnungsschleifmaschine beschrieben.

Beim ersten Ausführungsbeispiel des erfindungsgemäßen Verfahrens zum Abrichten eines Profilierwerkzeuges auf der Verzahnungsschleifmaschine wird dabei ein mehrlagig hartstoffbeschichtetes rotationssymmetrisches Profilierwerkzeug am Schleifkopf der Verzahnungsschleifmaschine, d. h. in der Arbeitsspindel 5, eingespannt und um die B1-Achse angetrieben. Die Geschwindigkeit und Drehrichtung kann dabei durch den Antrieb der B1-Achse gezielt gesteuert werden. Mittels der A1-Achse kann das Profilierwerkzeug im Normalschnitt mit dem Abrichtwerkzeug, welches an der Profilierspindel 4 montiert wird, in Kontakt gebracht werden.

Als Werkzeug zum Abrichten dient dabei entweder eine Formrolle mit definiertem Kopfradius oder bei Bedarf mit abgesetztem definierten Kopfradius. Dieses Werkzeug ist Hartstoff-belegt und wird in der Profilierspindel eingespannt, wobei die Geschwindigkeit und Drehrichtung um die B3-Achse bestimmt wird, wenn das abzurichtende Profilierwerkzeug in der Arbeitsspindel eingespannt ist.

Es ist aber auch möglich, das mehrlagig hartstoffbeschichtete Profilierwerkzeug auf der Profilierspindel einzuspannen und die Geschwindigkeit und Drehrichtung der B3-Achse gezielt zu definieren und das abzurichtende mehrlagig hartstoffbeschichtete Profilierwerkzeug bei Bedarf um die C5-Achse der Profilierspindel zu schwenken. In diesem Fall wird das Abrichtwerkzeug in der Arbeitsspindel gespannt, um die B1-Achse angetrieben und vershiftet, wobei die Drehrichtung frei gewählt werden kann.

Beim Abrichten können das Abrichtwerkzeug und das Profilierwerkzeug in einem definierten, optimierten Geschwindigkeitsverhältnis miteinander in Punkt-Kontakt gebracht werden, wobei bei Bedarf das Abricht- oder Profilierwerkzeug um die C5-Achse der Profilierspindel gezielt geschwenkt werden kann, um für jedem Kontaktpunkt den optimalen Punkt des Abrichtwerkzeugs in Kontakt zu bringen und eine hohe Endgenauigkeit sicherzustellen.

Durch die NC-Achsen V1, Z1 und X1 kann dann jede beliebige Bahn gezielt abgefahren werden, so dass der Kopfradius des Profilierwerkzeugs, die Profilform wie z. B. die Balligkeit, Kopfrücknahme und Fußrücknahme sowie der Radius am Kopfabrichter erzeugt werden können. Das Profilieren erfolgt dabei mit sehr kleinen Beträgen, um das Profilierwerkzeug und das Abrichtwerkzeug zu schonen und eine lange Lebensdauer des Profiliervverkzeugs zu ermöglichen.

Zum Überprüfen der Geometrie des hergestellten Profilierwerkzeugs kann dieses vor dem Profilieren einer Schleifschnecke auf der Profilierspindel eingespannt werden und mittels eines Tasters, welcher am Schleifkopf montiert ist, in X- und V-Richtung abgetastet und damit vermessen werden, um die erzeugte Endqualität zu dokumentieren und bei Bedarf einen weiteren Abrichtschritt durchzuführen. Diese Prüfmethode kann auch als Verschleißüberwachung verwendet werden und in festgelegten Intervallen, z. B. nach einer festgelegten Anzahl von Profiliervorgängen der Schleifschnecke, eingesetzt werden.

Nach mehreren Einsätzen des Profilierwerkzeugs und dem Auftreten von Verschleiß wird das Werkzeug durch erneuertes Abrichten nachbearbeitet. Sind Änderungen der Profilgeometrie gewünscht und erforderlich, kann das Profilierwerkzeug schon vor dem Standzeitende durch Abrichten mit geänderten NC-Daten modifiziert werden.

Ein so hergestelltes Profilierwerkzeug kann für das Profilieren einer zylindrischen oder dreidimensionalen modifizierten Schleifschnecke mit entsprechenden Profilparametern eingesetzt werden. Es kann weiterhin bei Bedarf für getrennte Schnecken z. B. für das Schruppen oder Schlichten auch zwei- oder mehrmalig zum Einsatz kommen.

Im Folgenden wird nun ein zweites Ausführungsbeispiel des erfindungsgemäßen Abrichtens eines Profilierrades dargestellt. Als Basis dient dabei ein mehrlagig hartstoffbeschichtetes Zahnrad, welches gerade oder schräg verzahnt ist. Weiterhin ist es möglich, als Ausgangskörper einen scheibenförmigen, zylindrischen Rohling zu verwenden, wenn der Zahnradmodul begrenzt und das abzutragende Volumen klein ist.

Dieses Profilierzahnrad oder dieser Rohling werden erfindungsgemäß auf die Werkstückaufnahme gespannt und können so gezielt um die C2-Achse gedreht und positioniert werden. Das Abrichtwerkzeug wird auf der Arbeitsspindel eingespannt und über die entsprechenden NC-Achsen der Verzahnungsschleifmaschine bewegt.

Als Abrichtwerkzeuge zum Abrichten des Profilierrades dienen hartstoffbelegte Profilschleifscheiben für den Ein- oder Zweiflankenschliff. Ebenso können weitere Hartstoff besetzte Profilierwerkzeuge oder Profilschleifscheiben eingesetzt werden.

Zum Abrichten des Profilierrades wird vorteilhafterweise zum Vor-, Fertig- und Nachbearbeiten Teilwälzschleifen (Punktberührung) oder das Profilschleifen (Vollformberührung) eingesetzt. Es wird entweder im Einflanken- oder Zweiflankenschliff operiert. Es kann auch die Kombination der beiden Verfahren zum Einsatz kommen, wobei auf der Arbeitsspindel auch mehrere gleiche oder verschiedene Werkzeuge zum Abrichten des Profilzahnrades gespannt werden können.

Das Vermessen des Profilierzahnrades erfolgt wie das Vermessen des oben beschriebenen rotationssymmetrischen Profilierwerkzeugs, indem das Profilierzahnrad auf der Profilierspindel eingespannt und über einen Tastkopf, welcher am Schleifkopf angeordnet wird, abgetastet wird. Das Profilierzahnrad kann so geprüft und die ermittelten Daten der Maschinensteuerung zurückgekoppelt werden. Diese Daten unterstützen wiederum den Profilierungsvorgang und dienen bei späteren Einsätzen des Profilierzahnrads zum exakten Profilieren der Schleifschnecke.

Zusammenfassend werden nun noch einmal die beiden Ausführungsbeispiel kurz gegenübergestellt:
Als erstes Ausführungsbeispiel des Verfahrens der vorliegenden Erfindung wurde dabei ein Verfahren zum Vor-, Fertig- oder Nachbearbeiten eines scheibenförmigen Profilierwerkzeugs in der Verzahnungsschleifmaschine beschrieben. Bei diesem Verfahren wird das mehrlagig Hartstoff-belegte Profilierwerkzeug in die Arbeitsspindel der Verzahnungsschleifmaschine eingespannt und mit einem Hartstoffbelegten Abrichtwerkzeug, das auf der Profilierspindel der Verzahnungsschleifmaschine eingespannt wird, in optimalem Abrichtverhältnis vor-, fertig- und nachbearbeitet. Beide Werkzeuge werden von den jeweiligen Spindeldrehachsen in Rotation versetzt und die Kontur des Profilienwerkzeugs wird mit den weiteren NC-Maschinenachsen bahngesteuert abgefahren. Dabei findet ein punktförmiger Kontakt zwischen dem Profilierwerkzeug und dem Abrichtwerkzeug statt. Durch die freie Wahl der NC-gesteuerten Bahnkontur sind alle möglichen Profilveränderungen und Korrekturen am Profilwerkzeug erzeugbar, so dass dieses Werkzeug später auf der Verzahnungsschleifmaschine zum Profilieren von Schleifschnecken und Schleifscheiben verwendet werden kann. Alternativ kann das scheibenförmige Profilierwerkzeug auch in der Profilierspindel eingespannt werden und das Abrichtwerkzeug in der Arbeitsspindel.

In einem zweiten Ausführungsbeispiel wurde ein Verfahren zum Herstellen eines Profilierzahnrades beschrieben, welches mehrlagig hartstoffbelegt ist und auf der Verzahnungsschleifmaschine mit einem hartstoffbelegten Abrichtwerkzeug vor-, fertig- und nachbearbeitet wird. Dazu wird auf dem Maschinentisch das gerade oder schräg verzahnte Profilierzahnrad als Werkstück eingespannt und mit einem Abrichtwerkzeug NC-gesteuert abgerichtet, wobei das dazu verwendete Abrichtwerkzeug auf der Arbeitsspindel der Schleifmaschine positioniert ist. Durch die Wahl des diskontinuierlichen Wälzschleifens (Teilwälzschleifen) im Einflanken- oder Zweiflankenschliff und/oder dem einflankigen oder zweiflankigen diskontinuierlichen Profilschleifen mit jeweils hartstoffbelegten Abrichtwerkzeugen als Abrichtverfahren können Profilierzahnräder ohne oder mit gezielten Profil- und Zahnrichtungskorrekturen erzeugt werden. Diese Profilierzahnräder dienen auf der Verzahnungsschleifmaschine zur Vor- oder Fertigprofilierung von zylindrischen Schleifschnecken, die wiederum zum Verzahnungsschleifen von unkorrigierten oder topologisch modifizierten Getriebezahnrädern zum Einsatz kommen.

Der Schutzbereich der Erfindung ist in den folgenden Patentansprüchen festgelegt.

## Patentansprüche

1. Verfahren zum Betrieb einer Verzahnungsschleifmaschine, mit den Betriebsphasen der Verzahnungsschleifmaschine
- Bearbeiten eines in einer Werkstückaufnahme (3) eingespannten Werkstückes (6) auf der Verzahngsschleifmaschine mittels einer in einer Arbeitsspindel (5) eingespannten Schleifscheibe und/oder Schleifschnecke (1),
- Profilieren der Schleifscheibe und/oder Schleifschnecke (1) auf der Verzahnungsschleifmaschine mittels eines rotationssymmetrischen in einer Profilienspindel (4) eingespannten Profilierwerkzeuges (2) und
- Abrichten des Profilierwerkzeuges (2) zum Profilieren einer Schleifscheibe und/oder Schleifschnecke (1) auf der Verzahnungsschleifmaschine, **dadurch gekennzeichnet dass** zum Abrichten des Profilierwerkzeuges (2) das in die Arbeitsspindel (5) eingespannte Profilierwerkzeug (2) mit einem in der Profilierspindel (4) der Verzahnungsschleifmaschine eingespannten Abrichtwerkzeug abgerichtet wird oder das in die Profilierspindel (4) der Verzahnungsschleifmaschine eingespannte Profilierwerkzeug (2) mit einem in die Arbeitsspindel (5) der Verzahnungsschleifmaschine eingespannten Abrichtwerkzeug abgerichtet wird oder das in die Werkstückaufnahme (3) eingespannte Profilierwerkzeug (2) mit einem in die Arbeitsspindel (5) der Verzahnungsschleifmaschine eingespannten Abrichtwerkzeug abgerichtet wird.

2. Verfahren nach Anspruch 1, wobei im Schleifbetrieb der Verzahnungsschleifmaschine ein in einer Werkstückaufnahme eingespanntes Werkstück mit einer in eine Arbeitsspindel eingespannten Schleifscheibe und/oder Schleifschnecke bearbeitet wird.

3. Verfahren nach einem der vorangegangenen Ansprüche, wobei im Profilierbetrieb der Verzahnungsschleifmaschine eine in eine Arbeitsspindel eingespannte Schleifscheibe und/oder Schleifschnecke mit einem in eine Profilierspindel eingespannten Profilierwerkzeug profiliert wird.

4. Verfahren nach einem der vorangegangenen Ansprüche, wobei für den Abrichtbetrieb eine separate Abrichtspindel eingesetzt wird.

5. Verfahren nach einem der vorhergehenden Ansprüche, wobei das Profilierwerkzeug und/oder das Abrichtwerkzeug um die jeweiligen Spindeldrehachsen in Rotation versetzt werden.

6. Verfahren nach Anspruch 5, wobei die Kontur des Profiliervverkzeugs mit den weiteren Maschinenachsen abgefahren wird, insbesondere indem die Arbeitsspindel geschwenkt, vershiftet und/oder zugestellt und/oder die Profilierspindel geschwenkt und/oder die Abrichtspindel entsprechend bewegt wird.

7. Verfahren nach einem der vorangegangenen Ansprüche wobei zum Abrichten eines Profilierwerkzeuges, welches die Form eines Zahnrades aufweist, das in die Werkstückaufnahme eingespannte Profilierwerkzeug mit einem in die Arbeitsspindel der Verzahnungsschleifmaschine eingespannten Abrichtwerkzeug abgerichtet wird.

8. Verfahren nach Anspruch 7, wobei das Abrichten durch Wälzschleifen, insbesondere Teilwälzschleifen und/oder Profilschleifen erfolgt.

9. Verfahren nach Anspruch 7 oder 8, wobei das Profilierwerkzeug in die Werkstückaufnahme gespannt, gedreht und positioniert wird und das in die Arbeitsspindel eingespannte Abrichtwerkzeug in Rotation versetzt wird.

10. Verfahren nach einem der Ansprüche 7 bis 9, wobei das in die Arbeitsspindel eingespannte Abrichtwerkzeug verschwenkt und vershiftet wird, der Arbeitshub durch eine Bewegung der Arbeitsspindel in eine Richtung parallel zur Drehachse der Werkstückaufnahme erfolgt und das Abrichtwerkzeug durch eine Bewegung der Arbeitsspindel in eine Richtung senkrecht zur Drehachse der Werkstückaufnahme an das Profilierwerkzeug herangefahren wird.

11. Verfahren nach einem der vorangegangenen Ansprüche zum Abrichten eines ein- oder mehrlagig hartstoffbelegten Profilierwerkzeuges.

12. Verfahren nach einem der vorangegangenen Ansprüche, wobei das Profilierwerkzeug auf der Verzahnschleifmaschine vermessen wird.

13. Verfahren nach Anspruch 12, wobei der Verschleiß des Profilierwerkzeugs anhand der Vermessungsdaten überwacht wird.

14. Verfahren nach Anspruch 12, wobei der Einsatz des Profilierwerkzeugs beim Profilieren der Schleifscheibe und/oder Schleifschnecke auf Grundlage der Vermessungsdaten erfolgt.

15. Verfahren nach Anspruch 12, wobei das Abrichten des Profilierwerkzeugs auf Grundlage der Vermessungsdaten erfolgt.

16. Verfahren nach Anspruch 12, wobei das Profilierwerkzeug zum Vermessen in die Profilierspindel gespannt und durch einen Tastkopf abgetastet wird.

17. Verfahren nach einem der vorangegangenen Ansprüche, wobei zum Abrichten des Profilierwerkzeuges ein hartstoffbelegtes Abrichtwerkzeug eingesetzt wird.

18. Verzahnungsschleifmaschine zum Bearbeiten eines Werkstücks (6) mittels einer Schleifscheibe und/oder Schteifschnecke (1) und zum Abrichten eines Profilierwerkzeuges (2), mit einer insbesondere rechnergestützter Steuerung, welche bei Betrieb, der Verfahren nach einem der vorangegangenen Ansprüche auf der Verzahnungsschleifmaschine durchführt.

19. Verzahnungsschleifmaschine nach Anspruch 18 mit einer Werkstückaufnahme zum Einspannen eines Werkstücks und mit einer Arbeitsspindel zum Einspannen einer Schleifscheibe und/oder Schleifschnecke.

20. Verzahnungsschleifmaschine nach Anspruch 19, wobei die Werkstückaufnahme um eine Drehachse gedreht werden kann und die Arbeitsspindel in eine Richtung parallel zur Drehachse der Werkstückaufnahme und in eine Richtung senkrecht zur Drehachse der Werkstückaufnahme bewegt werden kann.

21. Verzahnungsschleifmaschine nach Anspruch 20, wobei die Arbeitsspindel in Richtung ihrer Drehachse vershiftet und um eine Schwenkachse, welche senkrecht zur Drehachse der Werkstückaufnahme verläuft, verschwenkt werden kann.

22. Verzahnungsschleifmaschine nach einem der Ansprüche 18-21 mit einer Profilierspindel zum Einspannen eines Profilierwerkzeugs.

23. Verzahnungsschleifmaschine nach Anspruch 22, wobei die Profilierspindel in eine Richtung parallel zur Drehachse der Werkstückaufnahme bewegt und um eine Schwenkachse, welche parallel zur Drehachse der Werkstückaufnahme verläuft, verschwenkt werden kann.

24. Verzahnungsschleifmaschine nach einem der Ansprüche 18-23, mit einer Abrichtspindel zum Einspannen eines Abrichtwerkzeuges.

25. Verzahnungsschleifmaschine nach Anspruch 24, wobei die Abrichtspindel im Bereich der Profilierspindel angeordnet ist und mit dieser bewegt und/oder verschwenkt werden kann oder die Abrichtspindel im Bereich der Arbeitsspindel angeordnet ist und mit dieser bewegt, verschwenkt und/oder vershiftet werden kann.

26. Verzahnungsschleifmaschine nach einem der Ansprüche 18-25, mit einem Arbeitsmodus, in welchem ein Werkstück mittels einer Schleifscheibe und/oder Schleifschnecke bearbeitet wird.

27. Verzahnungsschleifmaschine nach einem der Ansprüche 18-26, mit einem Profiliermodus, in welchem eine Schleifscheibe und/oder Schleifschnecke mittels eines Profilierwerkzeugs profiliert wird.

28. Verzahnungsschleifmaschine nach einem der Ansprüche 18-27, mit einem Abrichtmodus zum Abrichten eines dem Profilieren einer Schleifscheibe und/oder Schleifschnecke dienenden Profilierwerkzeuges.

29. Verzahnungsschleifmaschine nach einem der Ansprüche 18-28, mit einem Vermessungsmodus, in welchem ein Profilierwerkzeug vermessen wird.

30. Verzahnungsschleifmaschine nach einem der Ansprüche 18-29, wobei die Steuerung einen oder mehrere Betriebsmodi und/oder eine Bedienerführung zur Durchführung eines Verfahrens nach einem der vorangegangenen Ansprüche aufweist.

31. Steuerungssoftware für eine Verzahnungsschleifmaschine, insbesondere in einem Datenspeicher oder auf einem Datenträger gespeicherte Steuerungssoftware, mit Programmcode, der so angepaßt ist, dass er auf einer Verzahnungsschleifmaschine nach einem der Ansprüche 18 bis 30 das Verfahren nach einem der Ansprüche 1 bis 17 ausführt.

32. Verwendung einer Verzahnungsschleifmaschine nach einem der Ansprüche 18-30 zur Durchführung eines Verfahrens nach einem der Ansprüche 1-17.

33. Verwendung einer Verzahnungsschleifmaschine nach Anspruch 32 mit einem Abrichtwerkzeug und/oder Profilierwerkzeug zur Durchführung eines Verfahrens nach einem der Ansprüche 1-17.

## Claims

1. A method for operating a gear grinding machine, comprising the operating phases of the gear grinding machine
- machining of a workpiece (6) clamped in a workpiece mount (3) on the gear grinding machine by means of a grinding wheel and/or a worm grinding wheel (1) clamped in a working spindle (5);
- profiling the grinding wheel and/or the worm grinding wheel (1) on the gear grinding machine by means of a rotationally symmetrical profiling tool (2) clamped in a profiling spindle (4); and
- dressing the profiling tool (2) for profiling a grinding wheel and/or a worm grinding wheel (1) on the gear grinding machine,
**characterised in that**,
for the dressing of the profiling tool (2), the profiling tool (2) clamped into the working spindle (5) is dressed by a dressing tool clamped in the profiling spindle (4) of the gear grinding machine or the profiling tool (2) clamped into the profiling spindle (4) of the gear grinding machine is dressed by a dressing tool clamped into the working spindle (5) of the gear grinding machine or the profiling tool (2) clamped into the tool mount (3) is dressed by a dressing tool clamped into the working spindle (5) of the gear grinding machine.

2. A method in accordance with claim 1, wherein a tool clamped in a tool mount is machined by a grinding wheel and/or a worm grinding wheel clamped into a working spindle in the grinding operation of the gear grinding machine.

3. A method in accordance with one of the preceding claims, wherein a grinding wheel and/or a worm grinding wheel clamped into a working spindle is profiled by a profiling tool clamped into a profiling spindle in the profiling operation of the gear grinding machine.

4. A method in accordance with one of the preceding claims, wherein a separate dressing spindle is used for the dressing operation.

5. A method in accordance with any one of the preceding claims, wherein the profiling tool and/or the dressing tool is/are set into rotation about the respective rotary spindle axes.

6. A method in accordance with claim 5, wherein the contour of the profiling tool is travelled over by the further machine axes, in particular in that the working spindle is pivoted, shifted and/or advanced and/or the profiling spindle is pivoted and/or the dressing spindle is moved accordingly.

7. A method in accordance with one of the preceding claims, wherein the profiling tool clamped into the tool mount is dressed by a dressing tool clamped into the working spindle of the gear grinding machine for dressing a profiling tool which has the form of a gear.

8. A method in accordance with claim 1, wherein the dressing takes place by generating grinding, in particular part generating grinding and/or profile grinding.

9. A method in accordance with either of claims 7 or 8, wherein the profiling tool is clamped into the tool mount, is rotated and positioned and the dressing tool clamped into the working spindle is set into rotation.

10. A method in accordance with one of the claims 7 to 9, wherein the dressing tool clamped into the working spindle is pivoted and shifted, the working stroke takes place by a movement of the working spindle in a direction parallel to the axis of rotation of the tool mount and the dressing tool is moved toward the profiling tool by a movement of the working spindle in a direction perpendicular to the axis of rotation of the tool mount.

11. A method in accordance with one of the preceding claims for dressing of a profile tool covered with a single-layer or multilayer hard material.

12. A method in accordance with one of the preceding claims, wherein the profiling tool is measured on the gear grinding machine.

13. A method in accordance with claim 12, wherein the wear of the profiling tool is monitored with reference to the measurement data.

14. A method in accordance with claim 12, wherein the use of the profiling tool in the profiling of the grinding wheel and/or the worm grinding wheel takes place on the basis of the measurement data.

15. A method in accordance with claim 12, wherein the dressing of the profiling tool takes place on the basis of the measurement data.

16. A method in accordance with claim 12, wherein the profiling tool is clamped into the profiling spindle and is sampled by a probe head for the measurement.

17. A method in accordance with one of the preceding claims, wherein a dressing tool covered with a hard material is used for dressing the profiling tool.

18. A gear grinding machine for machining a workpiece (6) by means of a grinding wheel and/or a worm grinding wheel (1) and for dressing a profiling tool (2), having a controller, in particular a computer assisted controller, which carries out the method in accordance with one of the preceding claims on the gear grinding machine in operation.

19. A gear grinding machine in accordance with claim 18, having a workpiece mount for clamping a workpiece and having a working spindle for clamping a grinding wheel and/or a worm grinding wheel.

20. A gear grinding machine in accordance with claim 19, wherein the workpiece mount can be rotated about an axis of rotation and the working spindle can be moved in a direction parallel to the axis of rotation of the tool mount and in a direction perpendicular to the axis of rotation of the tool mount.

21. A gear grinding machine in accordance with claim 20, wherein the working spindle can be shifted in the direction of its axis of rotation and can be pivoted about a pivot axis which extends perpendicular to the axis of rotation of the workpiece mount.

22. A gear grinding machine in accordance with one of the claims 18-21, comprising a profiling spindle for clamping a profiling tool.

23. A gear grinding machine in accordance with claim 22, wherein the profiling spindle can be moved in a direction parallel to the axis of rotation of the workpiece mount and can be pivoted about a pivot axis which extends parallel to the axis of rotation of the workpiece mount.

24. A gear grinding machine in accordance with one of the claims 18-23, comprising a dressing spindle for clamping a dressing tool.

25. A gear grinding machine in accordance with claim 24, wherein the dressing spindle is arranged in the region of the profiling spindle and can be moved and/or pivoted with it or wherein the dressing spindle is arranged in the region of the working spindle and can be moved, pivoted and/or shifted with it.

26. A gear grinding machine in accordance with one of the claims 18-25, comprising a working mode in which a workpiece is machined by a grinding wheel and/or a worm grinding wheel.

27. A gear grinding machine in accordance with one of the claims 18-26, comprising a profiling mode in which a grinding wheel and/or a worm grinding wheel is profiled by means of a profiling tool.

28. A gear grinding machine in accordance with one of the claims 18-27, comprising a dressing mode for dressing a profiling tool serving the profiling of a grinding wheel and/or a worm grinding wheel.

29. A gear grinding machine in accordance with one of the claims 18-28, comprising a measurement mode in which a profiling tool is measured.

30. A gear grinding machine in accordance with one of the claims 18-29, wherein the controller has one or more operating modes and/or an operator interface for carrying out a method in accordance with one of the preceding claims.

31. Control software for a gear grinding machine, in particular control software stored in a data memory or on a data carrier, comprising program code which is adapted so that it executes the method in accordance with one of the claims 1 to 17 on a gear grinding machine in accordance with one of the claims 18 to 30.

32. Use of a gear grinding machine in accordance with one of the claims 18-30 for carrying out a method in accordance with one of the claims 1-17.

33. Use of a gear grinding machine in accordance with claim 32 having a dressing tool and/or having a profiling tool for carrying out a method in accordance with one of the claims 1-17.

## Revendications

1. Procédé destiné au fonctionnement d'une machine à affûter les engrenages, avec les phases de fonctionnement de la machine à affûter les engrenages
- Traitement d'une pièce à usiner (6) serrée dans une fixation de pièce (3) sur la machine à affûter les engrenages au moyen d'un disque de meulage et/ou une vis de meulage (1) serré dans un arbre moteur (5)
- Profilage du disque de meulage et/ou de la vis de meulage (1) sur la machine à affûter les engrenages à l'aide d'un outil de profilage à rotation symétrique (2) serré dans une broche de profilage (4) et
- Dressage de l'outil de profilage (2) destiné au profilage d'un disque de meulage et/ou une vis de meulage (1) sur la machine à affûter les engrenages,
**caractérisé en ce que**, pour le dressage de l'outil de profilage (2), l'outil de profilage (2) serré dans l'arbre moteur (5) est dressé avec un outil de dressage serré dans la broche de profilage (4) de la machine à affûter les engrenages ou **en ce que** l'outil de profilage (2) serré dans la broche de profilage (4) de la machine à affûter les engrenages est dressé avec un outil de dressage serré dans l'arbre moteur (5) de la machine à affûter les engrenages,
ou **en ce que** l'outil de profilage (2) serré dans la fixation de pièces (3) est dressé avec un outil de dressage serré dans l'arbre moteur (5) de la machine à affûter les engrenages.

2. Procédé selon la revendication 1, sachant qu'au mode de meulage de la machine à affûter les engrenages, une pièce à usiner serrée dans une fixation de pièce est traitée avec un disque de meulage et/ou une vis de meulage serré dans un arbre moteur.

3. Procédé selon une quelconque des revendications précédentes, sachant qu'au mode de profilage de la machine à affûter les engrenages, un disque de meulage et/ou une vis de meulage serré dans un arbre moteur est profilé avec un outil de profilage serré dans une broche de profilage.

4. Procédé selon une quelconque des revendications précédentes, sachant que pour le mode de dressage, une broche de dressage séparée intervient.

5. Procédé selon une quelconque des revendications précédentes, sachant que l'outil de profilage et/ou l'outil de dressage sont déplacés en rotation autour des axes de rotation respectifs des broches.

6. Procédé selon la revendication 5, sachant que le contour de l'outil de profilage est transporté avec les autres axes de machine, notamment en pivotant, en décalant et/ou en avançant l'arbre moteur, et/ou en pivotant la broche de profilage et/ou en déplaçant respectivement la broche de dressage.

7. Procédé selon une quelconque des revendications précédentes, sachant que pour le dressage d'un outil de profilage présentant la forme d'une roue dentée, l'outil de profilage serré dans la fixation de pièce est dressé avec un outil de dressage serré dans l'arbre moteur de la machine à affûter les engrenages.

8. Procédé selon la revendication 7, sachant que le dressage s'effectue par meulage par roulement, notamment par meulage par roulement partiel et/ou par rectification de profil.

9. Procédé selon la revendication 7 ou 8, sachant que l'outil de profilage est serré, tourné et positionné dans la fixation de pièce, et que l'outil de dressage serré dans l'arbre moteur est déplacé en rotation.

10. Procédé selon l'une des revendications 7 à 9, sachant que l'outil de dressage serré dans l'arbre moteur est pivoté et décalé, que la course motrice s'effectue par un mouvement de l'arbre moteur dans une direction parallèle à l'axe de rotation de la fixation de pièce et que l'outil de dressage est déplacé vers l'outil de profilage par un mouvement de l'arbre moteur dans une direction perpendiculaire à l'axe de rotation de la fixation de pièce.

11. Procédé selon une quelconque des revendications précédentes destiné au dressage d'un outil de profilage garni d'une ou plusieurs couches de matière dure.

12. Procédé selon une quelconque des revendications précédentes, sachant que l'outil de profilage est mesuré sur la machine à affûter les engrenages.

13. Procédé selon la revendication 12, sachant que l'usure de l'outil de profilage est surveillé à l'aide des données de mesurage.

14. Procédé selon la revendication 12, sachant que l'intervention de l'outil de profilage lors du profilage du disque de meulage et/ou de la vis de meulage s'effectue sur la base des données de mesurage.

15. Procédé selon la revendication 12, sachant que le dressage de l'outil de profilage s'effectue sur la base des données de mesurage.

16. Procédé selon la revendication 12, sachant que l'outil de profilage est serré dans la broche de profilage pour le mesurage et palpé par un palpeur.

17. Procédé selon une quelconque des revendications précédentes, sachant que pour le dressage de l'outil de profilage, un outil de dressage garni de matière dure intervient.

18. Machine à affûter les engrenages destinée au traitement d'une pièce à usiner (6) au moyen d'un disque de meulage et/ou une vis de meulage (1) et au dressage d'un outil de profilage (2), avec une commande notamment assistée par ordinateur, qui en cas de fonctionnement, exécute le procédé selon une quelconque des revendications précédentes sur la machine à affûter les engrenages.

19. Machine à affûter les engrenages selon la revendication 18 avec une fixation de pièce destinée au serrage d'une pièce à usiner, et avec un arbre moteur destiné au serrage d'un disque de meulage et/ou une vis de meulage.

20. Machine à affûter les engrenages selon la revendication 19, sachant que la fixation de pièce peut être tournée autour d'un axe de rotation et que l'arbre moteur peut être déplacé dans une direction parallèle à l'axe de rotation de la fixation de pièce et dans une direction perpendiculaire à l'axe de rotation de la fixation de pièce.

21. Machine à affûter les engrenages selon la revendication 20, sachant que l'arbre moteur peut être décalé dans la direction de son axe de rotation et pivoté autour d'un axe de pivotement qui s'étend perpendiculairement à l'axe de rotation de la fixation de pièce.

22. Machine à affûter les engrenages selon l'une des revendications 18-21 avec une broche de profilage destinée au serrage d'un outil de profilage.

23. Machine à affûter les engrenages selon la revendication 22, sachant que la broche de profilage est déplacée dans une direction parallèle à l'axe de rotation de la fixation de pièce, et peut être pivotée autour d'un axe de pivotement qui s'étend parallèlement à l'axe de rotation de la fixation de pièce.

24. Machine à affûter les engrenages selon l'une des revendications 18-23 avec une broche de dressage destinée au serrage d'un outil de dressage.

25. Machine à affûter les engrenages selon la revendication 24, sachant que la broche de dressage est disposée dans la zone de la broche de profilage et qu'elle peut être déplacée et/ou pivotée avec celle-ci ou que la broche de dressage est disposée dans la zone de l'arbre moteur et qu'elle peut être déplacée, pivotée et/ou décalée avec celui-ci.

26. Machine à affûter les engrenages selon l'une des revendications 18-25, avec un mode de traitement, auquel une pièce à usiner est traitée au moyen d'un disque de meulage et/ou une vis de meulage.

27. Machine à affûter les engrenages selon l'une des revendications 18-26, avec un mode de profilage, auquel un disque de meulage et/ou une vis de meulage est profilé au moyen d'un outil de profilage.

28. Machine à affûter les engrenages selon l'une des revendications 18-27, avec un mode de dressage destiné au dressage d'un outil de profilage servant au profilage d'un disque de meulage et/ou une vis de meulage.

29. Machine à affûter les engrenages selon l'une des revendications 18-28, avec un mode de mesurage auquel un outil de profilage est mesuré.

30. Machine à affûter les engrenages selon l'une des revendications 18-29, sachant que la commande présente un ou plusieurs modes d'exploitation et/ou un guide pour l'utilisateur, destiné à l'exécution d'un procédé selon une quelconque des revendications précédentes.

31. Logiciel de commande destiné à une machine à affûter les engrenages, notamment un logiciel de commande stocké dans une mémoire de données ou sur un support de données, avec un code de programme qui est adapté de manière à ce qu'il exécute le procédé selon l'une des revendications 1 à 17 sur une machine à affûter les engrenages selon l'une des revendications 18 à 30.

32. Utilisation d'une machine à affûter les engrenages selon l'une des revendications 18-30, destinée à l'exécution d'un procédé selon l'une des revendications 1-17.

33. Utilisation d'une machine à affûter les engrenages selon la revendication 32 avec un outil de dressage et/ou avec un outil de profilage destiné à l'exécution d'un procédé selon l'une des revendications 1-17.
